# EUROPEAN PATENT APPLICATION

(11) **EP 1 106 318 A2**
(43) Date of publication of application: **13.06.2001**
(21) Application number: 00125354.1
(22) Date of filing: 30.11.2000
(51) Int. Cl.: B28D 1/12

(54) **Reciprocating saw blade having plural layers**

(30) Priority: 02.12.1999 IT PD990270
(71) Applicant: Donazzan, Luigi, 36060 Romano D' Ezzelino (Vicenza) (IT)
(72) Inventor: Donazzan, Luigi, 36060 Romano D' Ezzelino (Vicenza) (IT)
(74) Representative: Modiano, Guido, Dr.-Ing.

(57) **Abstract**

Improved blade tool for reciprocating cutting comprising a metal supporting laminar core having, on a longitudinal edge thereof, diamond-coated plates (13), the core being placed between two layers (11) each consisting of at least one sheet made of interwoven fibers, the core and the sheets being bonded together as a single body through impregnation with epoxy adhesive.

## Description

The present invention relates to an improved blade tool for reciprocating cutting.

Blade tools for reciprocating cutting are already known which consist of a steel bearing laminar sheet having a substantially longitudinal extension, on a longitudinal edge of which plates are inserted which are made of diamond-coated sintered materials.

Although blade tools of this kind have been on the market for many years and are well known to the users, they are not free from drawbacks among which particularly important is the fact that in their reciprocating motion they create magnetic and sound waves, which give rise to vibration.

These vibrations negatively affect both the tool mechanical strength and the practicality and safety in use for the user.

These vibrations, in fact, cause a great increase of the operating temperature of the tool, thus reducing its mechanical strength, and also create a rather high and deafening noise which makes advisable for the worker to use noise-muffling headpieces or other protection devices.

It should also be noted that the decrease in the tool mechanical strength entails breaking or detaching of the diamond-coated plates, which is a hazard both for the operator and the workpiece.

The aim of the present invention is to eliminate the above-mentioned drawbacks of conventional blade tools for reciprocating cutting.

Within this aim, an object of the present invention is to improve the quality yield of the cut made by the tool in the workpiece.

Another important object is to speed up the cutting operation.

This aim and these and other objects which will become better apparent hereinafter are achieved by an improved blade tool for reciprocating cutting, comprising a metallic supporting laminar core having on an edge thereof diamond-coated plates, said core being placed between two layers each consisting of at least one sheet made of interwoven fiber glass, said core and said sheets being bonded together as a single body through impregnation with epoxy adhesive.

Further characteristics and advantages of the present invention will become better apparent from the following detailed description of a preferred but not exclusive embodiment thereof, illustrated only by way of non-limitative example in the accompanying drawings, wherein:
Fig. 1 is a perspective view of a blade tool, according to the invention;
Fig. 2 is a cross sectional view, taken along a plane passing at one of the cutting plates of the tool of Fig. 1;
Fig. 3 is an enlarged detail view of one of the two faces of the tool of Fig. 1.

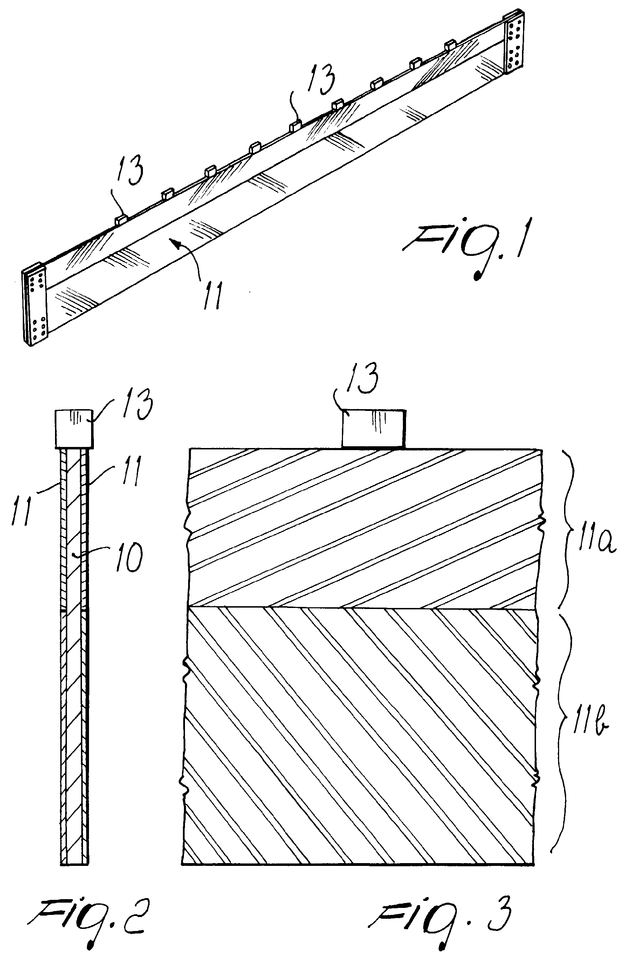

With reference to the figures, an improved blade tool comprises a supporting core 10, consisting of a metal sheet, with a substantially longitudinal extension, said metal being preferably steel, but also aluminium or any metal having similar characteristics of mechanical strength, placed between two composite layers 11.

Each layer 11 is in fact composed of at least one sheet of interwoven fiber glass, interposed and impregnated with epoxy adhesive.

The fiber glass can also be conveniently interwoven or braided with the material known under the trade name kevlar.

Advantageously, the fibers are arranged with an inclination of 30° to the longitudinal axis of the tool from the region where the sintered diamond-coated plates 13 are placed, up to a distance of about 4 cm (region 11a), and are placed with an inclination of 45° from this region to the other edge of the tool (region 11b).

The core 10 and the layers 11 impregnated with adhesive to be activated are placed in a sterile chamber for the required time, and preferably at a constant temperature of 16 to 18°C.

As a result, a monolithic and compact unit is obtained, whose outer layers 11 also help increasing the mechanical strength of the supporting core 10.

It should also be pointed out that in an alternative embodiment, the outer layers 11 can be made separately from the core 10, and applied thereto by means of an epoxy adhesive in a subsequent step.

By way of example only, it is pointed out that the core 10 can have a thickness in the range of 0.5 to 5 mm, and the diamond-coated plates 13 have a thickness in the range of 2 to 8,5 mm.

Conveniently, the layers 11 must have such thickness that the total thickness, including the core 10, is less or equal to that of the plates 13.

It is also pointed out that the number of the sheets constituting each layer 11 is suitably from 1 to 3, also interposed with epoxy adhesive (cold bonding agent), according to the users' requirements.

Practical tests have shown that the above-mentioned improved tool, consisting of a core 10 and layers 11 with interwoven fiber glass arranged with the two inclinations, has the effect of disrupting the magnetic resonance point, thus increasing the noiselessness of the tool in use and the quality of the cutting thanks to the drastic reduction of the induced vibrations.

The presence of the two layers 11 makes the tools self-cleaning as well as safe.

In fact, any cracks or fissures, possibly present on the core 10, do not cause complete failure of the tool or parts thereof to break away, which could have dreadful effects for either the worker or the machine.

It has thus been observed that the disclosed invention achieves the intended aim and objects.

The invention thus conceived is susceptible to numerous modifications and variations all of which fall within the scope of the inventive concept.

All the details may further be replaced with other technically equivalent elements.

In practice, the materials employed as well as the shapes and dimensions may be any according to requirements.

The disclosures in Italian Patent Application No. PD99A000270 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An improved blade tool for reciprocating cutting, characterized in that it comprises a metal supporting laminar core having on an edge thereof diamond-coated plates, said core being placed between two layers each consisting of at least one sheet made of interwoven fibers, said core and said sheets being bonded together as a single body through impregnation with epoxy adhesive.

2. The tool according to claim 1, characterized in that said interwoven fibers are fiber glass.

3. The tool according to claim 1, characterized in that said layers comprise kevlar.

4. The tool according to one or more of the preceding claims, characterized in that said fibers are arranged with an inclination of 30° to the longitudinal axis of the tool, from the cutting edge up to a distance of about 4 cm from said axis.

5. The tool according to one or more of the preceding claims, characterized in that said fibers are arranged with an inclination of 45° to the longitudinal axis from said distance of about 4 cm from the cutting edge up to the opposite edge.

6. The tool according to one or more of the preceding claims, characterized in that the thickness of said core added to that of said two layers is less than or equal to that of the diamond-coated plates applied to the cutting edge.
